# EUROPEAN PATENT APPLICATION

(11) **EP 1 918 863 A1**
(43) Date of publication of application: **07.05.2008**
(21) Application number: 06123245.0
(22) Date of filing: 31.10.2006
(51) Int. Cl.: G06Q 10/00, G06Q 30/00

(54) **Systems and Methods for Real-Time Network-Based Supply Chain Management**

(71) Applicant: TÜRKMEN, Atila, Besiktas, Istanbul (TR)
(72) Inventor: TÜRKMEN, Atila, Besiktas, Istanbul (TR)
(74) Representative: Modiano, Micaela Nadia

(57) **Abstract**

Systems and methods for customer control in real-time of the manufacturing process used by a manufacturer to produce a product in accordance with design parameters set by the customer. A customer may place an order through a network along with a set of design parameters and a set of critical dates that act as milestones for completion of the product assembly or manufacture. A customer retains control of the manufacturing process and may approve of the progress of the manufacture of the product one manufacturing step at a time. A customer generally maintains the power to suspend the manufacturing process if a design parameter is not met by the time of a critical date.

## Description

### Field of the Invention

The present invention relates generally to systems and methods for real-time network based customer centered supply chain management. More specifically, the present invention relates to systems and methods allowing a customer to control and monitor product manufacture that is done by a manufacturer during the manufacturing process.

### Background of the Invention

Network based supply chain management and control of manufacturing processes are vital components of product development and assembly. Through various networks, a user may place an order with a company for just about any desired product, from books to cars. Typically, the user indicates what standard product is desired, and the company will then take that product from inventory and send it to the user, completing the transaction. It is also possible for a user to place a customized order through a network, where the user is able to order a product with special features. Alternatively, the user may order additional product features by selecting from one or more of several available options. The user may also select a method of shipping, and through known means the user may track the status of the shipping of the product.

It may be possible for the user to confirm the fact that the product order has been placed, or that the order has been received, but that the product has not yet been shipped to the user. However, the common drawback of known network-based product ordering systems and methods is that the user does not have real time in-line or in-process control of the manufacture of the product. Furthermore, the user cannot control or suspend the manufacturing process by inspecting product compliance with the specifics of the user order at each step of the manufacturing process. In present systems and methods, the user such as a customer, is powerless to see, evaluate, comment on, or control any of the steps of the manufacturing of the product. As a result, errors that a user would have noticed in an early stage of product manufacture go undetected until after the entire product has been shipped. The user is then often required to return the entire product and the entire manufacturing process must be repeated.

Existing network-based systems and methods for product ordering are designed so that after ordering a product, the user becomes an outside party, with no control or influence over the manufacturing of the desired product. This problem becomes evident in situations where a customized product is critical to a user, and the user desires to inspect the product at all stages of the manufacturing process to ensure that the product is being assembled or manufactured in a particular way. Failure to have this type of user control of a manufacturing process of a customized product can result in extended lead times for the user to receive the product, wasted resources involved with the return of defective products, the shipment of noncompliant products, lack of user knowledge of the status of the manufacturing process, and other delays.

### Summary of the Invention

From the foregoing, it is apparent there is a direct need for network based customer centered real-time and in-process supply chain management allowing for the order and manufacture of customized products, while allowing the customer to monitor and control the steps of the manufacturer's assembly process. Further, it is desirable to implement these systems and methods on existing networks. Thus, the aim of the present invention is to overcome the above mentioned problems by providing systems and methods related to real-time network-based customer centered supply chain management. To increase efficiency by ensuring the product is in compliance with the customers requirements, the customer maintains control over each step of the manufacturing process and customer approval may be required at any point during product manufacture before the manufacture process proceeds. This ensures product compliance with customized customer requirements. To increase efficiency and reduce cost, the systems and methods of the present invention may be implemented with existing networks. This provides a robust solution that improves interoperability, access, and compatibility.

This aim and others are achieved by a method for real-time network-based custom order processing and supply chain management for the manufacture of a product allowing for customer approval of each step of a multi-step manufacturing process, comprising: receiving a plurality of design parameters from a customer; storing the design parameters on a model card; transmitting at least one of the stored design parameters to a manufacturer based at least in part on the model card; producing a plurality of critical dates, each critical date corresponding to one of a plurality of manufacturing steps that are required to manufacture a product; verifying, by the customer, that at least one manufacturing step has been completed in accordance with the design parameters on or before the associated critical date; and proceeding, after customer verification, to the next step in the manufacturing process.

The above mentioned aim and others are also achieved by a system for real-time network-based custom order placement and supply chain management for the manufacture of a product allowing for customer approval of each step of a multi-step manufacturing process, comprising: a receiver for receiving a plurality of design parameters from a customer; the receiver receiving a plurality of critical dates, each critical date corresponding to one of a plurality of manufacturing steps that are required to manufacture a product; a storage unit for storing the design parameters on a model card; a transmitter for transmitting at least one of the stored design parameters to a manufacturer based at least in part on the model card; a processor associated with the receiver, the storage unit, and the transmitter, the processor controlling the commencement of the plurality of manufacturing steps that are required to manufacture a product; the receiver receiving verification from the customer that at least one manufacturing step has been completed in accordance with the design parameters on or before the associated critical date; and the processor proceeding, after customer verification, to order the commencement of the next step in the manufacturing process.

These aims and others may also be achieved by an article of manufacture comprising a program storage medium having computer readable program code embodied therein for real-time network-based custom order processing and supply chain management for the manufacture of a product allowing for customer approval of each step of a multi-step manufacturing process, the computer readable program code in the article of manufacture comprising: computer readable code for causing a computer to receive a plurality of design parameters from a customer; computer readable code for causing a computer to store the design parameters on a model card; computer readable code for causing a computer to transmit at least one of the stored design parameters to a manufacturer based at least in part on the model card; computer readable code for causing a computer to produce a plurality of critical dates, each critical date corresponding to one of a plurality of manufacturing steps that are required to manufacture the product; computer readable code for causing a computer to verify, in response to customer input, that at least one manufacturing step has been completed in accordance with the design parameters on or before the associated critical date; and computer readable code for causing a computer to proceed, after customer verification, to the next step in the manufacturing process.

In certain embodiments, the invention may also include customer verification that each manufacturing step has been completed prior to a critical date that corresponds to each manufacturing step. The customer may also define a plurality of tests to verify that the product is consistent with the design parameters at the expiration of each critical date. Furthermore, the customer may suspend the manufacturing process due to noncompliance of the product with at least one of the design parameters at the expiration of at least one of the plurality of critical dates, and the design parameters may include any combination of delivery type, price, quantity, color, shape, or mode of shipment. In some circumstances, the customer may inspect a visual representation of the product at a particular manufacturing step to determine if the design parameters are being properly implemented.

The aim and objects of this invention are achieved by the methods and systems according to independent claim 1 and any other independent claims of this invention. Further details may be found in the remaining dependent claims.

Other aspects and advantages of the present invention will become apparent from the following detailed description, taken in conjunction with the accompanying drawings, illustrating the principles of the invention by way of example only.

### Brief Description of the Drawings

The foregoing and other objects, features, and advantages of the present invention, as well as the invention itself, will be more fully understood from the following description of various embodiments, when read together with the accompanying drawings, in which:
Figure I is a flow chart depicting a method for network based customer centered supply chain management in accordance with an embodiment of the invention; and

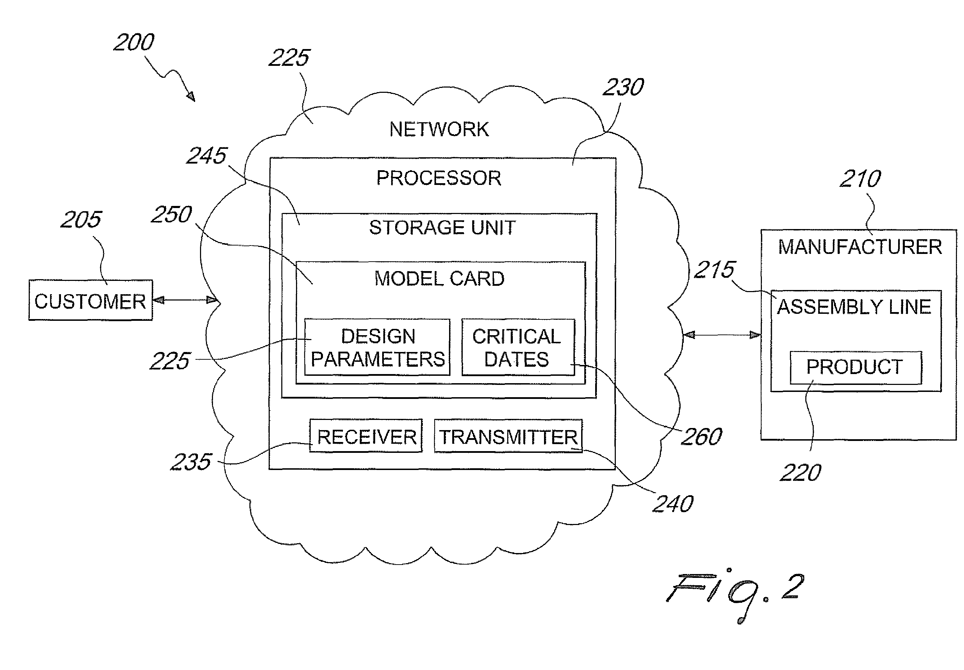

Figure 2 is a block diagram depicting a system for network based customer centered supply chain management in accordance with an embodiment of the invention.

### Detailed Description

As shown in the drawings for the purposes of the illustration, the invention may be embodied in systems and methods for real-time network based customer centered supply chain management. These systems and methods allow for the order and manufacture of customized products, while allowing the customer to monitor and control the steps of the manufacturer's assembly process to ensure that the customer's design parameters are being implemented in real-time. Embodiments of the invention use existing networks to allow real-time customer control of the manufacture of a product that the customer has ordered produced by a manufacture.

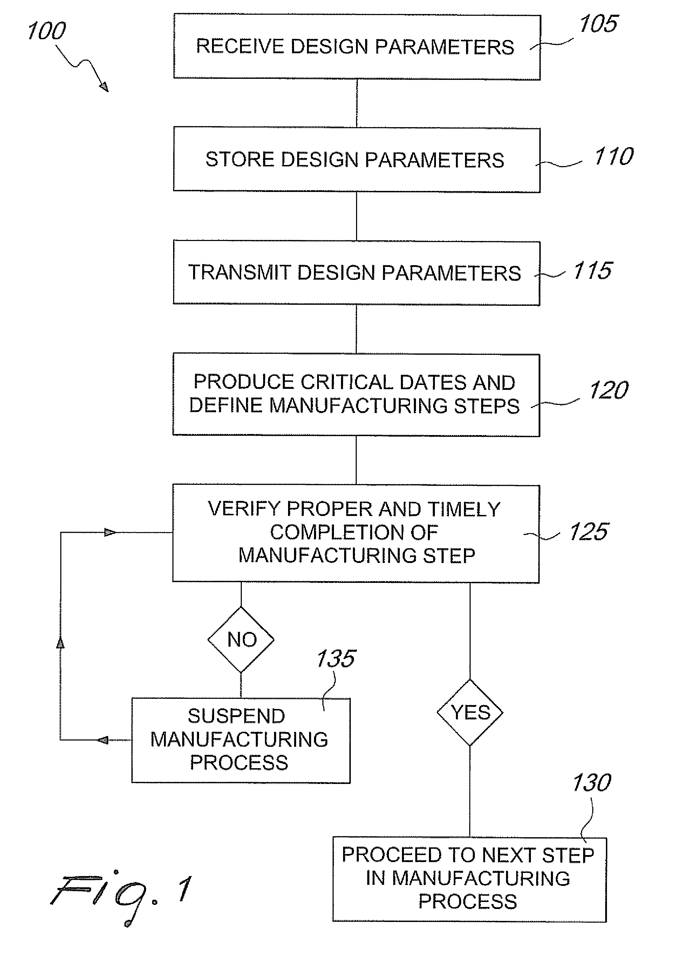

In brief overview, Figure 1 is a flow chart depicting a method 100 for network based customer centered supply chain management in accordance with an embodiment of the invention. The method 100 may include a first step of receiving a plurality of design parameters from a customer (STEP 105). This receiving step (STEP 105) may generally include receiving design parameters by any means. Typically, this includes any electronic device capable of receiving an electronic data signal such as for example incoming electromagnetic waves. Receiving step (STEP 105) may be capable of handling incoming wired or wireless signals. Receiving step (STEP 105) may also include inputting a signal in any manner so that the contents of the signal are transferred to the receiver.

Method 100 next may include the step of storing the design parameters on a model card (STEP 110). Storing the design parameters (STEP 110) may include storing data in any data storage medium, including for example random access memory, read only memory, or flash memory. Method 100 generally then proceeds to the step of transmitting at least one of the stored design parameters to a manufacturer based at least in part on the model card (STEP 115). Transmitting (STEP 115) generally includes any transmission of the design parameters or any other data such as through a network such as the Internet or a Global System for Mobile Communications (GSM) network. Transmitting at least one of the stored design parameters (STEP 115) may include wired or wireless transmission.

Method 100 also typically includes the step of producing a plurality of critical dates, each critical date corresponding to one of a plurality of manufacturing steps that are required to manufacture a product (STEP 120). Producing the critical dates (STEP 120) may be accomplished by the customer, the manufacturer, at least one third party, or any combination thereof. In some embodiments, the customer may select from a group of pre-existing critical dates. Alternatively, the customer may produce customized critical dates specific to the product.

Next, method 140 may proceed to the step of verifying, by the customer, that at least one manufacturing step has been properly completed before each corresponding critical date (STEP 125). Generally, the verification step (STEP 125) requires that the customer confirm proper and timely completion of the manufacture of the product or a portion of the product. The verification that at least one manufacturing step had been completed (STEP 125) generally includes comparing, by the customer, the product itself with an image of the product as the customer expects it to look like after completion of a manufacturing step. For example, if the product is an article of clothing such as a dress, and after the second manufacturing step a particular seam is required to have been sewn, the customer must verify (STEP 125) that this has occurred upon completion of that manufacturing step. Continuing with this example, the customer is generally able to do this by visual inspection of the dress, or inspection of a visual image of the dress transmitted to the customer after the second manufacturing step. This verification (STEP 125) may occur remotely as electronic communication through a network, or as part of an on-site inspection.

Once the customer has verified proper completion of a manufacturing step (STEP 125), method 100 generally proceeds to the next step in the manufacturing process (STEP 130). To continue with the dress manufacturing example illustrated above, once the particular seam was sewn in the previous step, the manufacturing process may then be instructed to proceed to the next step of the manufacturing process (STEP 130), which may for example include cutting the fabric at a particular location.

Alternatively, if the customer is unable to verify proper completion of a manufacturing step (STEP 125) due perhaps to a defect in the product observed by the customer, method 100 may then suspend the manufacturing process (STEP 135). This suspension step (STEP 135) generally occurs due at least in part to non-compliance of the product with at least one design parameter at the expiration of at least one of the plurality of critical dates (STEP 135), Typically, this may involve the customer directly ordering that the manufacturing process, such as an assembly line of a manufacturer, be suspended or shut down. In such a case, the customer and manufacturer may then work together to determine why the result of the previous manufacturing step has not been accomplished. Furthermore, suspending the manufacturing process (STEP 135) prevents losses associated with the continued manufacture of defective products.

In some embodiments where the manufacturing process has been suspended (STEP 135), after the problem leading to the suspension has been resolved, method 100 may then proceed to the next manufacturing step in the manufacturing process (STEP 130) and production may continue.

As can be seen from the above, method 100 allows a customer to monitor and control a manufacturing process of a manufacturer to fulfill the requirements of the customer's order. The customer, from a remote location, is generally able to maintain complete control over the manufacturing process. The customer may produce critical dates, such as deadlines, that require that production reach a certain stage, and that correspond to specific steps in the manufacturing process (STEP 120). The customer may then inspect the in-process assembly of the product in real-time at each step in the manufacturing process (STEP 125). This inspection may be done remotely through a network by inspection of visual images of the manufacture of the product at any step in the manufacturing process (STEP 125). If the customer determines that the partially manufactured product is in accordance with the design parameters (STEP 125), the customer may communicate this approval to the manufacturer, and the process will continue to the next step (STEP 130). In some embodiments, silence by the customer may constitute approval (STEP 125). In other embodiments, the customer must affirmatively indicate proper and timely completion of a manufacturing step (STEP 125). Upon customer approval (STEP 125) the manufacture of the product will proceed to the next step (STEP 130). If the customer does not approve, due for example to a perceived defect in the product noticed by the customer during the manufacturing process, the customer may suspend the manufacturing process (STEP 135). Once this problem is resolved, the customer may order the restarting of the assembly line, or other resumption of the manufacturing process, and manufacturing of the product will generally resume by proceeding to the next step in the manufacturing process (STEP 130).

In brief overview, Figure 2 is a block diagram depicting a system 200 for network based customer centered supply chain management in accordance with an embodiment of the invention. System 200 generally includes a customer 205. Customer 205 may include a person or a corporation. Customer 205 is generally the entity that desires to place an order to manufacture a product. Typically, customer 205 places an order to manufacture a product with a manufacturer 210. Manufacturer 210 may include any person or company. Manufacturer 210 also generally includes an assembly line, production line, or manufacture line. This assembly line may be fully automated, manual, or a combination thereof. Manufacturer 210 is capable of manufacturing the product as desired by customer 205. Typically, manufacturer 210 and customer 205 are separate entities.

Manufacturer 210 generally is associated with an assembly line 215. Assembly line 215 generally includes an assembly for manufacturing, creating, or producing an item or product by undertaking a series of production steps. Assembly line 215 may be fully automated, fully manual, or a combination of both, and is generally capable of mass production. Assembly line 215 is generally the location where the manufacture of at least one product 220 takes place. Product 220 may be any physical object that customer 205 has ordered manufacturer 210 to produce. This order may include terms such as delivery type, price, quantity, or mode of shipment. This order may be sent and received electronically. For example, product 220 may be an article of clothing, such as a dress, shirt, shoes, or jacket. Product 220 may also include any accessory, such as a purse. Product 220 may also be any device that is assembled during a multistep assembly process.

System 200 also generally includes at least one network 225. Network 225 may include the Internet, a Local Area Network (LAN), a Wide Area Network (WAN) a Global System for Mobile Communications (GSM) network, or any other network. Network 225 may be capable of wired or wireless communication, or a combination thereof. Network 225 generally may include any network that assists with communication between customer 205 and manufacturer 210.

System 200 also typically includes at least one processor 230. Processor 230 may be included as part of any computer, and may include a central processing unit. Processor 230 is generally capable of manipulating or processing data, such as any communication between customer 205 and manufacturer. Processor 230 may also include a receiver 235 for inputting or receiving data to or from customer 205 or manufacturer 210, and a transmitter 240 for outputting or transmitting data to or from customer 205 or manufacturer 210. Receiver 235 and transmitter 240 may be part of the same overall unit of processor 230, such as a computer, or they may be separate entities that are each associated with processor 230 and/or each other. Processor 230 may be part of network 225, or may be external to network 225, and processor 230 may be associated with customer 205, manufacturer 210, or both.

System 200 also may also include a storage unit 245. Storage unit 245 is generally associated with processor 230. Storage unit 245 may include any device capable of electronically storing data, such as read only memory, random access memory, or flash memory. Storage unit 245 may also include a model card 250. Model card 250 generally stores at least one design parameter 255. Model card 250 may also be referred to as an order card, may generally include booking and order details, and may include testing procedures and follow up the status of orders. The design parameters 255 stored on model card 250 generally include all of the details, parameters, and specifications of products 220 so that manufacturer 210 may assemble products 220 on assembly line 215. In addition to design information, design parameters 255 may also include information such as product 220 price, color, product type, material to be used, or other information. Design parameters 255 generally define the design details of product 220 that can then be used as the basis for an order. In some embodiments, customer 205 may send an electronic communication, such as email, to processor 230 that includes design parameters 255.

Manufacturer 210 is generally bound to adhere to design parameters 255. Design parameters 255 are generally created by customer 205, and design parameters 255 may include parameters for each step of the manufacturing process and define how product 220 should look after a specific step in the manufacturing process has been completed. In some embodiments, there is one design parameter corresponding to each step in the manufacturing process. For example, design parameters 255 may state that step one of the manufacturing process includes selecting a cloth of a certain color, step two includes cutting the cloth to a certain size, and step three includes sewing the cloth at a certain location. These steps continue until the product, for example a dress, has been completely manufactured. In certain embodiments, a final design parameter 255 may require manufacturer 210 to send a report to customer 205 indicating that production of product 220 has been completed. Typically, this report is sent prior to the critical date 260 corresponding to the end of the manufacturing process and therefore the completion of production of the product. Customer 205 may then approve the product for shipment.

In various embodiments of the invention, customer 205 reviews the production of product 220 on assembly line 215 after each step of the manufacturing process. This review may be from a remote location. For example images of the manufacture of product 220 may be sent from manufacturer 210 through network 230 to customer 205. Customer 205 may then review the images to determine if design parameters 255 corresponding to a particular step in the manufacture of product 220 have been satisfied. If so, customer 205 may then order manufacturer 210 to proceed to the next step in the production or assembly of the product.

Storage unit 245 may also include at least one critical date 260. Typically, one critical date 260 is associated with one step in the manufacturing process. Critical dates 260 may also correspond to design parameters 255, and critical dates 260 may be stored on storage unit 245 and may be part of model card 250. In an illustrative embodiment, one critical date 260 may specify that the first step of the manufacturing process must be complete 3 days after receipt of the order. In another example, a critical date 260 may specify the due date by which a specific step in the manufacturing process must be completed. For example, critical dates 260 may require that is necessary for manufacturer 210 to receive the fabric for producing product 220 be a specific calendar date. Another critical date may require that this fabric be cut to a particular size or shape by another (later in time) calendar date. In some embodiments, there is one critical date 260 specifying when each step in the manufacturing process should be completed.

Generally at critical date 260 the status of the production of product 220 is communicated to customer 205 for approval. This communication may include visual representations of product 220 such as digital pictures sent from manufacturer 210 to customer 205 through network 225. Customer 205 then generally compares these visual images with the specifications from design parameters 255 to determine if product 220 is has been correctly manufactured up until that point. In certain embodiments, this verification by customer 205 may be automatic. In other embodiments, physical samples of product 220 may be sent to customer 205 for approval. If customer 205 is satisfied, customer 205 may then send a communication to manufacturer 210 ordering the process to continue to the net step. If customer 205 is not satisfied, customer 205 may order manufacturer 210 to suspend production of product 220. In some embodiments, absence of an instruction from customer 205 to suspend production may constitute verification that a particular design parameter has been successfully met by a particular critical date 260. In some embodiments, customer 205 may define a series of tests necessary to verify proper and timely completion of a manufacturing step. Customer 205 is also generally able to monitor and track the status of product 220 production including design parameters 255 and critical dates 260 through network 230.

System 200 may also enable customer 205 to dictate logistics to manufacturer 210. For example, customer 205 may decide on a particular mode of shipment, such as by truck, sea, air, or a combination thereof, to manufacturer 210 by communicating over network 225. The systems and methods of the invention are also capable of producing customs papers such as declaration forms, shipping manifests, and any other export or import documents. These systems and methods may also collect and distribute invoices, including shipment costs, and can distribute costs to any party, such as a customer, manufacturer, or a purchaser.

Method 100 and system 200 may also include reporting features. These reporting features supply periodic reports of order status or other data relevant to the order or other features of system 200. These periodic reports may occur at various intervals during order processing, and an report may be cross referenced against a previous or subsequent report to facilitate user interpretation, user follow-up, and user response to the systems and methods of the invention.

Various embodiments of the invention include human resources and personnel modules. Typically, method 100 and or system 200 may include human resources and personnel aspects of the invention include means for defining an organizational chart and creating a staff database. These systems and methods may include a performance and management system capable of assigning goals and approving the processes necessary to accomplish the goals. The performance and management system may also include performance appraisal and performance report of any personnel. Resulting from the performance appraisal and/or performance report, the systems and methods of the invention may then define training needs and creat plans for improved and more efficient human resources and personnel management and development. In various embodiments these systems and methods may also require periodic follow up reports after a given amount of time, such as annually.

Note that in Figures 1 and 2, the enumerated items are shown as individual elements. In actual implementations of the invention, however, they may be inseparable components of other electronic devices such as a digital computer. Thus, actions described above may be implemented in software that may be embodied in an article of manufacture that includes a program storage medium. The program storage medium includes data signals embodied in one or more of a carrier wave, a computer disk (magnetic, or optical (e.g., CD or DVD, or both), non-volatile memory, tape, a system memory, and a computer hard drive.

From the foregoing, it will be appreciated that the systems and methods provided by the invention afford a simple and effective way for customer control in real-time of the manufacturing process used by a manufacturer to produce a product in accordance with design parameters set by the customer. The systems and methods according to embodiments of the invention are able to allow the customer to place an order through an existing network along with a set of design parameters and a set of critical dates that act as milestones for completion of the product assembly or manufacture. This increases supply chain management efficiency and compatibility, and lowers cost.

One skilled in the art will realize the invention may be embodied in other specific forms without departing from the spirit or essential characteristics thereof. The foregoing embodiments are therefore to be considered in all respects illustrative rather than limiting of the invention described herein. Scope of the invention is thus indicated by the appended claims, rather than the foregoing description, and all changes that come within the meaning and range of equivalency of the claims are therefore intended to be embraced therein.

## Claims

1. A method for real-time network-based custom order processing and supply chain management for the manufacture of a product allowing for customer approval of each step of a multi-step manufacturing process, comprising:
receiving a plurality of design parameters from a customer;
storing the design parameters on a model card;
transmitting at least one of the stored design parameters to a manufacturer based at least in part on the model card;
producing a plurality of critical dates, each critical date corresponding to one of a plurality of manufacturing steps that are required to manufacture a product;
verifying, by the customer, that at least one manufacturing step has been completed in accordance with the design parameters on or before the associated critical date; and
proceeding, after customer verification, to the next step in the manufacturing process.

2. The method of claim 1, comprising:
verifying, by the customer, that each manufacturing step has been completed before each corresponding critical date.

3. The method of claim 1, comprising:
defining, by the customer, a plurality of tests to verify product consistency with the design parameters at the expiration of each critical date.

4. The method of claim 1, comprising:
suspending, by the customer, the manufacturing process due to noncompliance of the product with at least one of the design parameters at the expiration of at least one of the plurality of critical dates.

5. The method of claim 1 wherein transmitting at least one of the stored design parameters comprises transmitting data indicating at least one of a delivery type, a price, a quantity range, a product color, a product shape, and a mode of shipment.

6. The method of claim 1 wherein verifying, by the customer, that at least one manufacturing step has been completed comprises inspection of a visual representation of the product by the customer.

7. A system for real-time network-based custom order placement and supply chain management for the manufacture of a product allowing for customer approval of each step of a multi-step manufacturing process, comprising:
a receiver for receiving a plurality of design parameters from a customer;
the receiver receiving a plurality of critical dates, each critical date corresponding to one of a plurality of manufacturing steps that are required to manufacture a product;
a storage unit for storing the design parameters can a model card;
a transmitter for transmitting at least one of the stored design parameters to a manufacturer based at least in part on the model card;
a processor associated with the receiver, the storage unit, and the transmitter, the processor controlling the commencement of the plurality of manufacturing steps that are required to manufacture a product;
the receiver receiving verification from the customer that at least one manufacturing step has been completed in accordance with the design parameters on or before the associated critical date; and
the processor proceeding, after customer verification, to order the commencement of the next step in the manufacturing process.

8. The system of claim 7 wherein the customer verifies that each manufacturing step has been completed before each corresponding critical date.

9. The system of claim 7, further comprising a plurality of tests defined by the customer to verify product consistency with the design parameters at the expiration of each critical date.

10. The system of claim 7 wherein the customer suspends the manufacturing process due to noncompliance of the product with at least one of the design parameters at the expiration of at least one of the plurality of critical dates.

11. The system of claim 7 wherein the stored design parameters comprise at least one of a delivery type, a price, a quantity range, a product color, a product shape, and a mode of shipment.

12. The system of claim 7 wherein verifying, by the customer, that at least one manufacturing step has been completed comprises inspection of a visual representation of the product by the customer.

13. An article of manufacture comprising a program storage medium having computer readable program code embodied therein for real-time network-based custom order processing and supply chain management for the manufacture of a product allowing for customer approval of each step of a multi-step manufacturing process, the computer readable program code in the article of manufacture comprising:
computer readable code for causing a computer to receive a plurality of design parameters from a customer;
computer readable code for causing a computer to store the design parameters on a model card;
computer readable code for causing a computer to transmit at least one of the stored design parameters to a manufacturer based at least in part on the model card;
computer readable code for causing a computer to produce a plurality of critical dates, each critical date corresponding to one of a plurality of manufacturing steps that are required to manufacture the product;
computer readable code for causing a computer to verify, in response to customer input, that at least one manufacturing step has been completed in accordance with the design parameters on or before the associated critical date; and
computer readable code for causing a computer to proceed, after customer verification, to the next step in the manufacturing process.
